**Europäisches Patentamt**

**European Patent Office**

**Office européen des brevets**

(19)

(11) Veröffentlichungsnummer: **0 128 319**
**B1**

(12) # EUROPÄISCHE PATENTSCHRIFT

(45) Veröffentlichungstag der Patentschrift:
**04.02.87**

(51) Int. Cl.⁴: **F 16 H 3/08**

(21) Anmeldenummer: **84104832.5**

(22) Anmeldetag: **30.04.84**

(54) Wechselgetriebe mit synchronisiertem Rückwärtsgang.

(30) Priorität: **07.06.83 DE 3320494**

(43) Veröffentlichungstag der Anmeldung:
**19.12.84 Patentblatt 84/51**

(45) Bekanntmachung des Hinweises auf die Patenterteilung:
**04.02.87 Patentblatt 87/6**

(84) Benannte Vertragsstaaten:
**FR GB IT**

(56) Entgegenhaltungen:
**AT-B-208 230**
**AU-B-409 751**
**DE-A-1 945 721**
**DE-C-265 373**
**DE-C-1 188 449**
**FR-A-2 422 875**
**GB-A-2 031 531**
**US-A-4 000 662**
**US-A-4 065 981**

(73) Patentinhaber: **GETRAG Getriebe- und Zahnradfabrik GmbH, Postfach 449 Solitudeallee 24, D-7140 Ludwigsburg (DE)**

(72) Erfinder: **Knödel, Gunter, Gaussweg 3, D-7130 Mühlacker (DE)**
Erfinder: **Helms, Georg, Im Lerchenholz 25, D-7140 Ludwigsburg (DE)**

(74) Vertreter: **Patentanwälte Kohler - Schwindling - Späth, Hohentwielstrasse 41, D-7000 Stuttgart 1 (DE)**

EP 0 128 319 B1

LIBER, STOCKHOLM 1987

## Beschreibung

Die Erfindung betrifft ein Wechselgetriebe gemäß dem Oberbegriff von Anspruch 1, das aus der FR-A-2 422 875 bekannt ist.

Ein Wechselgetriebe ist weiterhin aus der DE-A-30 55 625 bekannt, das sowohl auf der Antriebswelle als auch auf der Abtriebswelle jeweils ein drehfest mit der zugeordneten Welle verbundenes Rad aufweist, das ausschließlich dem Rückwärtsgang zugeordnet ist, und es ist mit diesen beiden Zahnrädern ein auf einer feststehenden Achse verschiebbares Schaltrad in Eingriff bringbar. Obwohl dieses bekannte Wechselgetriebe mindestens drei zusätzliche Zahnräder für das Einschalten des Rückwärtsganges benötigt, macht es nur von einem Schieberad Gebrauch, das eine Synchronisierung des Getriebes nicht zuläßt. Die zusätzlichen Zahnräder auf Antriebs- und Abtriebswelle vergrößern die Baulänge des Getriebes.

Aus der GB-PS 2 031 551 ist ein Wechselgetriebe bekannt, bei dem ebenfalls zum Einlegen des Rückwärtsganges ein Schieberad dient, das mit einem extra zu diesem Zweck auf der Antriebswelle angeordneten Festrad in Eingriff bringbar ist. In diesem Fall ist das Schieberad nicht auf einer feststehenden Achse, sondern auf einer Welle drehfest angeordnet, die ein zweites Zahnrad trägt, das mit einem auf der Abtriebswells fest angeordneten Zahnrad in Eingriff steht. Auch hier ist wieder eine Zahnradanordnung vorhanden, die sich einerseits wegen der Verwendung eines Schieberades nicht synchronisieren läßt und die andererseits erheblich zur Baulänge dss Getriebes beiträgt, weil auf An- und Abtriebswelle zusätzlichs Zahnräder für den Rückwärtsgang vorgesehen sein müssen.

Aus der DE-AS 1 155 449 ist schließlich ein Wechselgetriebe in Gruppenbauart bekannt, bei dem zwischen die Antriebswelle und die gleichachsige Vorgelegewelle ein Gruppengetriebe schaltbar ist, das zwei auf der Antriebswelle frei drehbar gelagerte Zahnräder umfaßt, von denen das eine mit einem auf der Antriebswelle drehfesten Zahnrad und das andere mit einem auf der Vorgelegewelle drehfesten Zahnrad in Eingriff steht. Zum Einschalten des Gruppengetriebes sind die beiden auf der Abtriebswelle frei drehbaren Zahnräder miteinander kuppelbar. Zum Einschalten der Rückwärtsgänge dient wiederum ein auf einer dritten Welle verschiebbar aber drehfest gelagertes Schieberad, das keine Synchronisation zuläßt, und es wirkt mit den Rädern des Gruppengetriebes zusammen, so daß auch bei Fehlen des Gruppengetriebes zusätzliche Zahnräder zum Hauptschaltgetriebe benötigt werden, welche die Baulänge des Getriebes vergrößern. Bei diesem bekannten Getriebe sind die Schaltglieder des Hauptgetriebes alle auf der Abtriebswelle, also auf ein und derselben Welle angeordnet.

Demgegenüber liegt der Erfindung die Aufgabe zugrunde, ein Wechselgetriebe der eingangs genannten Art so auszubilden, daß es auch einen synchronisierten Rückwärtsgang aufweist, und dabei die Anordnung so zu treffen, daß die axiale Länge des Getriebes vermindert werden kann.

Diese Aufgabe wird nach der Erfindung mit den im Anspruch 1 enthaltenen Merkmalen gelöst.

Bei der erfindungsgemäßen Wechselgetriebe werden also außer dem neben Antriebs- und Abtriebswelle gelegenen Zwischenrad für den Rückwärtsgang keine weiteren Räder benötigt, weil für den Rückwärtsgang im übrigen von den für die Vorwärtsgänge vorhandenen Rädern Gebrauch gemacht wird, so daß die gesamte Baulänge für den Rückwärtsgang eingespart wird. Daher läßt sich auf diese Weise eine deutliche Verkürzung der Wechselgetriebe üblicher bauart erreichen, so daß es leichter wird als bisher, die Forderung nach einem kurzbauenden Wechselgetriebe zu erfüllen.

Die Erfindung läßt sich gleichermaßen bei Wechselgetrieben in Vorgelege- und in Zweiwellen-Bauart anwenden. Dabei versteht es sich, daß im vorliegenden Fall bei Getrieben in Vorgelege-Bauart als Antriebswelle die Vorgelegewelle zu betrachten ist, und nicht etwa die zum Antrieb der Vorgelegewelle dienende, gleichachsig zur Abtriebswelle angeordnete, mit dem Motor kuppelbare Welle. Dementsprechend muß dann bei einem Getriebe in Vorgelege-Bauart eine Schaltkupplung auf der Vorgelegewelle angeordnet sein, die gemäß dem Vorstehenden der Antriebswelle von Wechselgetrieben in Zweiwellen-Bauart entspricht. Die Anordnung von Schaltgliedern auf Antriebs- und Abtriebswelle ist zwar von Wechselgetrieben in Zweiwellen-Bauart an sich bekannt, bei Wechdelgetrieben in Vorgelege-Bauart jedoch ungebräuchlich.

Durch die Auswahl der miteinander über das zweiteilige Zwischenrad zum Einschalten des Rückwärtsganges koppelbaren Vorwärtsgänge in Verbindung mit der Wahl der Größe der Zwischenräder läßt sich die gewünschte Übersetzung für den Rückwärtsgang bestimmen. Dafür kann es besonders vorteilhaft sein, wenn die das Zwischenrad bildenden Losräder jeweils mit dem Losrad des zugeordneten Vorwärtsganges in Eingriff stehen.

Eine bevorzugte Ausführungsform der Erfindung sieht vor, daß die das Zwischenrad bildenden Losräder mit den Losrädern des ersten und des dritten Vorwärtsganges in Eingriff stehen.

Ein besonderer Vorteil des erfindungsgemäßen Wechselgetriebes besteht darin, daß die Schaltkupplung zwischen den beiden das Zwischenrad bildenden Losrädern mit beliebiger Schaltrichtung eingebaut werden kann. Dadurch ist es leicht möglich, die Betätigungsrichtung für den Rückwärtsgang zur Erzeugung eines beliebigen Schaltbildes auszuwählen. Dabei kann bei einem Getriebe mit fünf Gängen die Anordnung insbesondere so getroffen sein, daß die Bewegungsrichtung eines mit den Schaltkupplungen gekoppelten Schalthebels zum Einrücken des fünften Ganges und des Rückwärtsganges gleich ist.

Die Erfindung wird im folgenden anhand des in der Zeichnung dargestellten Ausführungsbeispieles näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen

Fig. 1 die schematische Darstellung eines 5-Gang-Wechselgetriebes nach der Erfindung,

Fig. 2 ein die Lage der Wellen des Getriebes nach Fig. 1 in einer zur Achsrichtung der Wellen senkrechten Ebene wiedergebendes Diagramm und

Fig. 3 einen Längsschnitt durch eine praktische Ausführungsform des in Fig. 1 schematisch angegebenen Getriebes.

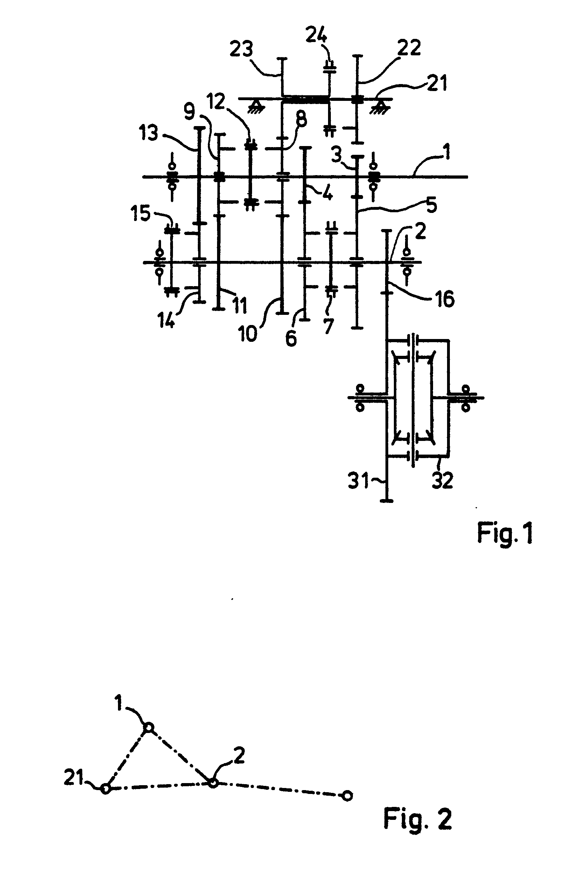

Bei dem Getriebe, dessen Aufbau schematisch in Fig. 1 angegeben ist, handelt es sich um ein Wechselgetriebe in Zweiwellen-Bauart, das eine mit einem Motor kuppelbare Antriebswelle 1 und eine dazu parallele Abtriebswelle 2 aufweist. Auf der Antriebswelle 1 befinden sich axial hintereinander zwei feste Zahnräder 3 und 4, die dem ersten bzw. zweiten Gang zugeordnet sind und mit entsprechenden Losrädern oder frei drehbare Zahnräder 5 bzw. 6 auf der Abtriebswelle 2 in Eingriff stehen. Zum Einrücken des ersten oder zweiten Ganges können die beiden Losräder 5 und 6 wahlweise mittels der Schaltmuffe 7 einer Synchroneinheit (Schaltkupplung) mit der Abtriebswelle 2 drehfest verbunden werden.

Auf der Antriebswelle 1 befinden sich nehen den beiden Festrädern (fest angeordnete Zahnräder) 5 und 4 zwei Losräder 8 und 9 (frei drehbare Zahnräder), die dem dritten und vierten Gang zugeordnet sind und jeweils mit einem Festrad (fest angeordnete Zahnräder) 10 bzw. 11 auf der Abtriebswelle 2 in Eingriff stehen. In diesem Fall sind zum Einrücken des dritten bzw. vierten Ganges die Losräder 5 und 9 wahlweise mittels der Schaltmuffe 12 einer Synchroneinheit (Schaltkupplung) mit der Antriebswelle 1 drehfest verbindbar. Auf der Antriebswelle 1 befindet sich noch ein weiteres Festrad 15, das mit einem Losrad 14 auf der Abtriebswelle 2 in Eingriff steht, das mittels der Schaltmuffe 15 einer weiteren Synchroneinheit (Schaltkupplung) mit der Abtriebswelle 2 fest verbindbar ist, um dadurch den fünften Gang einzurücken.

Die den einzelnen Gängen zugeordneten Räder sind in Längsrichtung der Wellen 1 und 2 in üblicher Weise hintereinander angeordnet, so daß das Hinzufügen jeweils eines Ganges die Baulänge des Getriebes vergrößert. Dei herkömmlichen Getrieben gilt das auch für den Rückwärtsgang. Obwohl auch das als Ausführungsbeispiel dargestellte Getriebe einen Rückwärtsgang aufweist, wird dadurch die Baulänge des Getriebes nicht vergrößert.

Wie auch bei herkömmlichen Getrieben dient zur Richtungsumkehr für den Rückwärtsgang ein Zwischenrad, das auf einer zu den Antriebs- und Abtriebswellen 1, 2 parallelen Achse (Rückwärtsgangwelle) 21 angeordnet ist. Wie aus Fig. 2 ersichtlich, liegen die Wellen 1, 2 und die Achse 21 derart auf den Ecken eines Dreieckes, daß ein auf der Achse 21 gelagertes Losrad 22 mit dem auf der Abtriebswelle 2 gelagerten Losrad 5 in Eingriff steht, welches dem ersten Gang zugeordnet ist, während ein zweites, auf der Antriebswelle 1 gelagerten Losrad 8 in Eingriff steht, welches dem dritten Gang zugeordnet ist. Zwischen den beiden auf der Achse 21 angeordneten Losrädern 22, 25 befindet sich eine Synchroneinheit mit einer Schaltmuffe (Schaltkupplung) 24, die es gestattet, die beiden Losräder 22, 23 drehfest miteinander zu verbinden, so daß sie ein gemeinsames Zwischenrad bilden, das die Rotation der Antriebswelle 1 unter Umkehrung der Drehrichtung auf die Abtriebswelle 2 überträgt. Dabei geht der Kraftfluß von der Antriebswelle 1 über das Festrad 3 und das Losrad 5 des ersten Ganges auf das einen Teil des Zwischenrades bildende Losrad 22, von dort über die Schaltmuffe 24 auf das zweite Losrad 23 des Zwischenrades, von dem schließlich der Kraftfluß über das Losrad 8 und das Festrad 10 des dritten Ganges auf die Abtriebswelle 2 gelangt. Von der Abtriebswelle 2 wird bei dem dargestellten Ausführungsbeispiel die Drehbewegung über ein Zahnrad 16 auf das Zahnrad 31 eines Differentialgetriebes 32 übertragen.

Bei dem in Fig. 1 dargestellten Schema ist die Synchroneinheit mit dem in Fig. 1 linken Losrad 25 des Zwischenrades fest verbunden, so daß die drehfeste Verbindung zwischen den beiden Losrädern 22 und 25 des Zwischenrades durch ein Verschieben der Schaltmuffe 24 nach rechts hergestellt wird. In der gleichen Richtung muß auch die Schaltmuffe 15 bewegt werden, um das Losrad 14 des fünften Ganges mit der Abtriebswelle 2 drehstarr zu verbinden. In diesem Fall müßte die Schaltvorrichtung für das Getriebe vier Schaltstangen aufweisen, sofern nicht von Anordnungen Gebrauch gemacht wird, die durch Anwenden eines Umlenkhebels das Einsparen einer Schaltstange ermöglichen, wie es beispielsweise aus der DE-PS 29 35 590 bekannt ist.

Die gleichsinnige Bewegung zum Einrücken von Rückwärtsgang und fünftem Gang macht es möglich, das übliche 4-Gang-Schaltbild für ein 5-Gang-Getriebe beizubehalten und lediglich durch eine zusätzliche Schaltkulisse zu ergänzen, die an der anderen Seite der Schaltkulissen für die Gänge eins bis vier liegt wie der Rückwärtsgang.

Das dargestellte Wechselgetriebe läßt sich aber auch ohne weiteres so einrichten, daß Rückwärtsgang und fünfter Gang auf einer gemeinsamen Schaltstange in entgegengesetzten Richtungen geschaltet werden können. Zu diesem Zweck genügt es, die Synchroneinheit zwischen den Losrädern 22, 23 des Zwischenrades umzudrehen, so daß die Schaltmuffe der mit dem in Fig. 1 rechts angeordneten Losrad des Zwischenrades verbundene Synchroneinheit durch Verschieben nach links mit dem zweiten Losrad 23 in Eingriff gebracht werden kann. Dann sind zum Einrücken des Rückwärtsganges und des fünften Ganges Bewegungen in entgegengesetzten Richtungen notwendig.

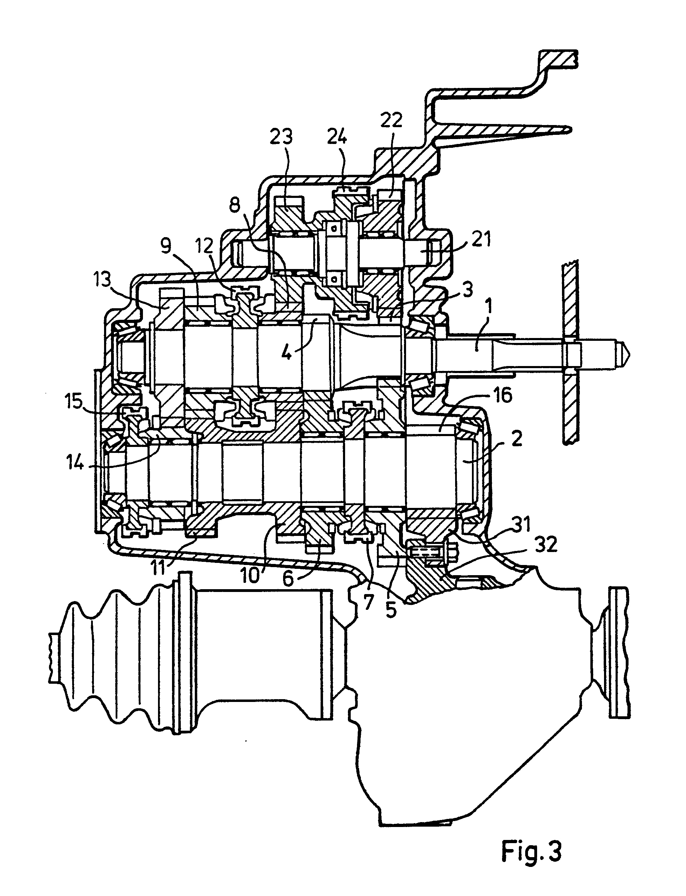

Fig. 3 veranschaulicht die konstruktive Ausführung des in Fig. 1 schematisch dargestellten Getriebes. Die anhand Fig. 1 erläuterten Bauteile sind in Fig. 3 mit den gleichen Bezugsziffern versehen wie in Fig. 1. Die Beschreibung der schematischen Darstellung nach Fig. 1 ist daher in vollem Umfang auf die Ausführungsform nach Fig. 3 lesbar, so daß zur Vermeidung von Wiederholungen auf die Beschreibung der Fig. 1 verwiesen wird.

Es versteht sich, daß die Erfindung nicht auf das dargestellte Ausführungsbeispiel geschränkt ist, sondern Abweichungen davon möglich sind, ohne den Rahmen der Erfindung zu verlassen. Es ist ohne weiteres erkennbar, daß die Erfindung nicht nur bei 5-Gang-Getrieben anwendbar ist, sondern ebenso bei Getrieben mit weniger oder auch noch mehr Gängen. Beispielsweise könnten die dem fünften Gang zugeordneten Räder 13, 14 sowie die zugeordnete Synchroneinheit mit Schaltmuffe 15 ohne weiteres fortgelassen werden, wenn nur ein 4-Gang-Getriebe benötigt wird. Weiterhin ist die Erfindung nicht auf Wechselgetriebe in Zweiwellen-Bauart beschränkt. Vielmehr könnte beispielsweise das in Fig. 1 dargestellte Getriebe auch in ein Getriebe in Vorgelege-Bauart umgewandelt werden, in dem eine zur Abtriebswelle 2 koaxiale Antriebswelle vorgesehen würde, die über ein Zahnradpaar mit der Welle 1 in Verbindung stünde, die dann zur Vorgelegewelle würde. Insofern ist also die Antriebswelle des dargestellten Wechselgetriebes in Zweiwellen-Bauart mit der Vorgelegewelle eines Wechselgetriebes in Vorgelege-Bauart gleichzusetzen. Dabei könnte auch die übliche, direkte Kupplung zwischen Antriebswelle und gleichachsiger Abtriebswelle vorgesehen werden.

Es versteht sich auch, daß die das Zwischenrad bildenden Losräder nicht unbedingt mit Losrädern der ausgewählten Gänge in Eingriff zu stehen brauchen, sondern auch unmittelbar mit ausgewählten Gängen zugeordneten Festrädern, sofern diese Festräder nur auf verschiedenen Wellen sitzen.

Endlich wäre auch denkbar, zwischen dem einen Gang zugeordneten Losrad auf einer Welle und einem auf der gleichen Welle angeordneten Festrad eines anderen Ganges ein zweistufiges Getriebe vorzusehen, das die Schaltkupplung für den Rückwärtsgang enthält, wenn sich dadurch Vorteile bezüglich des konstruktiven Aufbaues und der möglichen Übersetzung bei eingerücktem Rückwärtsgang ergeben. Insofern steht dem Konstrukteur auch die Wahl der Gänge frei, zwischen denen das zweiteilige, mit der Schaltkupplung versehene Zwischenrad oder ein zweistufiges Getriebe angeordnet werden soll.

**Patentansprüche**

1. Wechselgetriebe für Kraftfahrzeuge, mit einer Antriebswelle (1) bzw. einer Vorgelegewelle und einer parallel dazu angeordneten Abtriebswelle (2), mit mindestens vier auf jeder der Wellen angeordneten Zahnrädern (3, 4, 8, 9 bzw. 5, 6, 10, 11), die vier je einem Vorwärtsgang zugeordnete Zahnradpaare bilden, deren Zahnräder miteinander in Eingriff stehen und von denen das eine mit der zugeordneten Welle drehfest verbunden und das andere auf der zugeordneten Welle frei drehbar gelagert ist, wobei auf der Antriebswelle (1) und der Abtriebswelle (2) je zwei einander benachbarte Zahnräder (8, 9 bzw. 5, 6) frei drehbar gelagerte Zahnräder sind, mit zwischen je zwei frei drehbar gelagerten Zahnrädern angeordneten Schaltkupplungen (12, 7), mit denen wahlweise eines der frei drehbaren Zahnräder mit der zugeordneten Welle drehfest verbindbar ist, mit einer zu den An- und Abtriebswellen (1, 2) parallelen Rückwärtsgangwelle (21), auf der zwei gegeneinander frei drehbare Losräder (22, 23) angeordnet sind, von denen das eine mit einem auf der Antriebswelle (1) und das andere mit einem auf der Abtriebswelle (2) fest angeordneten Zahnrad (3 bzw. 10) in Eingriff steht, und mit einer zwischen den Losrädern (22, 23) angeordneten Schaltkupplung (24), mit der die beiden Losräder (22, 23) drehfest miteinander verbindbar sind, dadurch gekennzeichnet, daß mit der Antriebswelle (1) die den beiden niedrigeren Gängen zugeordneten Zahnräder (3, 4) und mit der Abtriebswelle (2) die den beiden höheren Gängen zugeordneten Zahnräder (10, 11) drehfest verbunden sind und von den Losrädern (22, 23) das eine mit einem der beiden mit der Antriebswelle (1) drehfest verbundenen, den niedrigeren Vorwärtsgängen zugeordneten Zahnrädern (3) und das andere mit einem der beiden mit der Abtriebswelle (2) drehfest verbundenen, den höheren Vorwärtsgängen zugeordneten Zahnrädern (10) in Antriebsverbindung steht.

2. Wechselgetriebe nach Anspruch 1, dadurch gekennzeichnet, daß die Losräder (22, 23) jeweils mit den auf der Antriebs- bzw. Abtriebswelle fest angeordneten Zahnrädern (3, 10) über die zugehörigen, auf der Abtriebs- bzw. Antriebswelle frei drehbar gelagerten Zahnräder (5, 8) in Antriebsverbindung stehen.

3. Wechselgetriebe nach Anspruch 2, dadurch gekennzeichnet, daß die Losräder (22, 23) mit den frei drehbar gelagerten Rädern (5, 8) des ersten und des dritten Vorwärtsganges in Eingriff stehen.

4. Wechselgetriebe nach einem der vorhergehenden Ansprüche mit fünf Gängen, dadurch gekennzeichnet, daß die Schaltkupplungen (15, 24) des fünften Ganges und des Rückwärtsganges so angeordnet sind, daß die Bewegungsrichtung eines mit den Schaltkupplungen gekoppelten Schalthebels in beiden Fällen gleich ist.

## Claims

1. A gearbox-transmission for motor vehicles comprising an input shaft (1) or a countershaft and an output shaft (2) arranged in parallel thereto at least four gearwheels (3, 4, 8, 9, and 5, 6, 10, 11) mounted on each of said shafts, which gearwheels form four pairs of meshing gearwheels, each pair providing one forward gear ratio, one of the gearwheels of each pair being non-rotatably joined to and the other one being freely rotatably journalled on the respective shaft, two adjacent ones of said freely rotatably journalled gearwheels (8, 9, and 5, 6) being mounted on the input shaft (1) and the other two on the output shaft (2), shift clutches (12, 7) mounted between the adjacent freely rotatably journalled gearwheels for selectively connecting one of said gearwheels non-rotatably to the respective shaft, a reverse shaft (21) mounted in parallel to the input and output shafts (1, 2), on which two idler gearwheels (22, 23) are mounted, which idler gearwheels are freely rotatable with respect to each other, one of said idler gearwheels being in driving connection with one gearwheel (3) mounted on and non-rotatably joined to the input shaft (1) and the other idler gearwheel being in driving connection with one gearwheel (10) mounted on and non-rotatably joined to the output shaft (2), and a reverse shift clutch (24) mounted between said idler gearwheels for selectively connecting said idler gearwheels (22, 23) non-rotatably together, characterized in that the gearwheels (3, 4) providing the lower two forward gear ratios are non-rotatably joined to the input shaft (1) whereas the gearwheels (10, 11) providing the higher two forward gear ratios are non-rotatably joined to the output shaft (2), and the idler gearwheels (22, 23) are each in driving connection with one of the gearwheels (3) being non-rotatably joined to the input shaft (1) and forming the lower forward gear ratios and one of the gearwheels (10) being non-rotatably joined to the output shaft (2) and forming the higher forward gear ratios, respectively.

2. The gearbox-transmission of claim 1, characterized in that the idler gearwheels (22, 23) are in driving connection with the respective gearwheels (3, 10) non-rotatably joined to the input and output shafts, respectively, by meshing with the freely rotatably journalled gearwheels (5, 8), each forming a pair with the respective non-rotatably joined gearwheel.

3. The gearbox-transmission of claim 2, characterized in that the idler gearwheels (22, 23) are meshing with the freely rotatably journalled gearwheels (5, 8) of the pairs providing the first and third forward gear ratios, respectively.

4. The gearbox-transmission of claim 1, having five forward gear ratios, characterized in that the shift clutches (15, 24) of the fifth gear ratio and of the reverse gear ratio are arranged such that a shift lever connected with said shift clutches has the same moving direction when either one of said gear ratios is selected.

## Revendications

1/ Boîte de vitesses pour véhicules automobiles, comprenant un arbre de transmission (1) ou arbre d'entraînement ou arbre menant et un arbre de transmission de réception ou arbre mené (2), qui lui est parallèle, ainsi qu'au moins quatre pignons (3, 4, 8, 9 et 5, 6, 10, 11) disposés sur chacun des arbres pignons qui forment quatre paires, chacune correspondant à une vitesse et dont les pignons sont en prise, l'un étant fixé sur l'arbre approprie et l'autre étant fou autour de l'arbre approprié, de telle sorte que sur l'arbre menant (1) et l'arbre mené (2), chaque paire de pignons voisins (8, 9 ou 5, 6) sont des pignons fous avec, disposées entre chaque paire de pignons fous, des embrayages a griffes appropries (12, 7), avec lesquels au choix l'un des pignons tous peut être fixé sur l'arbre approprié, la boîte comprenant aussi un arbre de marche arrière (21), parallèle aux arbres menant et mené (1, 2), sur lesquels sont disposées deux roues folles (22, 23) tournant librement l'une contre l'autre, dont l'une est en prise avec un pignon fixe sur l'arbre menant (1) et l'autre est en prise sur un pignon fixe sur l'arbre mené (2) un embrayage a griffes (24) disposé entre les roues folles (22, 23), permettant d'assurer entre elles une liaison permanente, caractérisée en ce que les pignons correspondant aux deux vitesses inférieures (3, 4) sont en liaison permanente avec l'arbre menant (1) et les pignons correspondant aux deux vitesses supérieures (10, 11) sont en liaison permanente avec l'arbre mené (2) et, des deux roues folles (22, 23), l'une est en liaison d'entraînement avec l'un des pignons (3) correspondant aux vitesses inférieures et en liaison permanente avec l'arbre menant (1) tandis que l'autre est en liaison d'entraînement avec le second des pignons (10) correspondant aux vitesses supérieures et en liaison permanente avec l'arbre menant (2).

2/ Boîte de vitesses selon la revendication 1, caractérisée en ce que les roues folles (22, 23) sont en liaison d'entraînement chacune avec les pignons (3, 10) fixés sur l'arbre de transmission menant ou mené, par l'intermédiaire de pignons (5, 8) fous sur l'arbre de transmission menant ou mené.

3/ Boîte de vitesses selon la revendication 2, caractérisée en ce que les roues folles (22, 23) sont en prise avec les pignons fous (5, 8) de la première et de la troisième vitesse.

4/ Boîte de vitesses selon l'une des revendications précédentes, à cinq vitesses, caractérisée en ce que les embrayages à griffes (15, 24) de la cinquième vitesse et de la marche arrière sont disposées de sorte que la direction est, dans les deux cas, la même que celle d'un levier de changement de vitesse couplé avec les embrayages à griffes.

Fig. 1

Fig. 2

Fig. 3